# EUROPÄISCHE PATENTSCHRIFT

(11) **EP 4 493 846 B1**
(45) Veröffentlichungstag und Bekanntmachung des Hinweises auf die Patenterteilung: **03.09.2025**
(21) Anmeldenummer: 23708457.9
(22) Anmeldetag: 27.02.2023
(51) Int. Cl.: F16K 31/524, F16K 1/52, F16K 31/385

(54) **VENTIL**
VALVE
SOUPAPE

(30) Priorität: 11.04.2022 DE 202022101944 U
(43) Veröffentlichungstag der Anmeldung: 22.01.2025
(73) Patentinhaber: Neoperl GmbH, 79379 Müllheim (DE)
(72) Erfinder: TEMPEL, Marc, 79111 Freiburg (DE)
(74) Vertreter: Mertzlufft-Paufler, Cornelius
(86) Internationale Anmeldenummer: PCT/EP2023/054845
(87) Internationale Veröffentlichungsnummer: WO 2023/198349

(56) Entgegenhaltungen:
- WO-A1-2019/211007
- WO-A1-2023/030582
- DE-U1- 202017 101 403
- JP-A- 2012 145 145
- JP-B2- 4 019 426

## Beschreibung

Die Erfindung betrifft ein Ventil, mit einem Betätigungselement, das entlang eines linearen Betätigungswegs manuell betätigbar ist, um das Ventil zu betätigen, und mit einem drehbaren Verstellelement, mit dem der Betätigungsweg manuell einstellbar ist, wobei das Betätigungselement relativ zu dem Verstellelement linear beweglich ist, wobei das Verstellelement mit einer Rasterung zusammenwirkt, die einen verfügbaren Verstellweg des Verstellelements in Einzelschritte unterteilt, wobei zwischen dem Verstellelement und dem Betätigungselement eine Steuerkurve ausgebildet ist, welche einen Betätigungsanschlag für das Betätigungselement bildet.

Ein solches Ventil ist beispielsweise aus WO 2019/211007 A1 bekannt.

Aus der DE 20 2017 101403 U1 ist ein Sanitärventil bekannt, wobei das Sanitärventil über ein Hauptventil, das eine bewegliche Membran aufweist, und ein Pilotventil verfügt, mit welchen das Hauptventil ansteuerbar ist, wobei eine Position der Membran durch eine Stellung eines Ventilstößels des Pilotventils vorgebbar ist.

Aus der JP 4019426 B2 ist ein weiteres Sanitärventil vorbekannt.

Aus der JP 2012 145145 A ist eine Wasserabgabevorrichtung bekannt, die durch einen Druckvorgang zwischen Wasserabgabe und Wasserstop umschaltet und durch einen Drehvorgang die Wasserabgabemenge einstellt.

Die WO 2023/030582 A1 beschreibt ein Servoventil mit einem Ventilgehäuse, einem Hauptventil und einem über eine Push-Push-Mechanik betätigbaren Vorsteuerventil zur Verstellung des Hauptventils zwischen einer Offen- und einer Schließstellung, wie welchem zwei zur Einstellung der Offenstellung gegeneinander verdrehbar angeordnete Stellscheiben vorgesehen sind.

Hierbei kann vorgesehen sein, dass der Betätigungsanschlag in einer Offenstellung des Ventils wirkt.

Der Erfindung liegt die Aufgabe zugrunde, die Betriebseigenschaften eines Ventils zu verbessern. Die Aufgabe wird durch die Merkmale der unabhängigen Ansprüche gelöst. Vorteilhafte Ausgestaltungen sind in den Unteransprüchen beschrieben.

Zur Lösung der genannten Aufgabe sind erfindungsgemäß die Merkmale des Anspruchs 1 vorgesehen. Insbesondere wird somit zur Lösung der genannten Aufgabe bei einem Ventil der eingangs beschriebenen Art erfindungsgemäß vorgeschlagen, dass die Steuerkurve und die Rasterung separat voneinander ausgebildet sind. Somit ist eine räumliche Trennung der Funktionen erreichbar. Dies erleichtert es, für die unterschiedlichen Funktionen jeweils die optimale Form und/oder das optimale Material wählen zu können. Drückbetätigung und Drehbetätigung sind somit unabhängig voneinander gestaltbar und/oder ausführbar.

Bei einer vorteilhaften Ausgestaltung kann vorgesehen sein, dass das Verstellelement mit einem Halteteil eines Niederhalters axial fixiert ist. Somit ist eine konstruktiv einfache Art der axialen Fixierung ausbildbar.

Hierbei kann vorgesehen sein, dass die Rasterung innerhalb eines von dem Halteteil eingenommenen Axialbereichs angeordnet ist. Somit ist eine verringerte axiale Baulänge erreichbar.

Bei einer vorteilhaften Ausgestaltung kann vorgesehen sein, dass die Rasterung beabstandet von dem Halteteil angeordnet ist. Somit sind die Funktionen der Unterteilung des Verstellwegs und der axialen Fixierung des Verstellelements räumlich getrennt voneinander realisierbar. Dies vereinfacht es, für jede Funktion eine optimale Ausgestaltung zu finden.

Hierbei kann vorgesehen sein, dass die Rasterung zwischen der Steuerkurve und dem Halteteil angeordnet ist. Somit kann beispielsweise die Steuerkurve an einem proximalen Ende des Ventils, also an einem Ort der bestimmungsgemäßen Betätigung, angeordnet werden.

Alternativ oder zusätzlich kann hierbei vorgesehen sein, dass die Steuerkurve zwischen Halteteil und Rasterung angeordnet ist. Somit kann beispielsweise die Rasterung an einem proximalen Ende des Ventils, also an einem Ort der bestimmungsgemäßen Betätigung, angeordnet werden.

Bei einer vorteilhaften Ausgestaltung kann vorgesehen sein, dass das Halteteil einen das Verstellelement an einer Schulter übergreifenden Kragen aufweist. Somit ist auf einfache Weise eine axiale Fixierung erreichbar.

Bei einer erfindungsgemäßen Ausgestaltung ist vorgesehen, dass die Rasterung ein Rastprofil und wenigstens einen Rastvorsprung hat. Somit ist eine konstruktiv einfach realisierbare Rasterung beschrieben.

Hierbei kann vorgesehen sein, dass der Rastvorsprung federnd gelagert ist. Dies kann eine Leichtgängigkeit der Rasterung verbessern. Es kann so auch eine materialschonende Betätigung erreichbar sein.

Bei einer vorteilhaften Ausgestaltung kann vorgesehen sein, dass ein, beispielsweise das bereits erwähnte, Rastprofil an dem Haltelement ausgebildet ist. Somit ist ein stabiles Widerlager für die Rasterung ausbildbar.

Alternativ oder zusätzlich kann hierbei vorgesehen sein, dass ein, beispielsweise das bereits erwähnte, Rastprofil an dem Verstellelement ausgebildet ist. Je nach sonstiger Ausgestaltung des Verstellelements kann diese Variante von Vorteil sein, um eine verbesserte Herstellbarkeit im Spritzgussverfahren, insbesondere eine verbesserte Entformbarkeit, zu erreichen.

Alternativ oder zusätzlich kann hierbei vorgesehen sein, dass ein, beispielsweise das bereits erwähnte, Rastprofil an dem Betätigungselement ausgebildet ist. Somit ist eine alternative Positionierung des Rastprofils erreichbar.

Bei einer vorteilhaften Ausgestaltung kann vorgesehen sein, dass wenigstens ein, beispielsweise der bereits erwähnte wenigstens eine, Rastvorsprung an dem Halteteil ausgebildet ist. Somit lässt sich eine Kraft, die bei einer Betätigung der Rasterung auf den wenigstens einen Rastvorsprung einwirkt, einfach ableiten.

Alternativ oder zusätzlich kann hierbei vorgesehen sein, dass wenigstens ein, beispielsweise der bereits erwähnte wenigstens eine, Rastvorsprung an dem Verstellelement ausgebildet ist. Somit ist ein verringerter Platzbedarf für die Rasterung an dem Verstellelement erforderlich.

Alternativ oder zusätzlich kann hierbei vorgesehen sein, dass wenigstens ein, beispielsweise der bereits erwähnte wenigstens eine, Rastvorsprung an dem Betätigungselement ausgebildet ist. Hierbei ist somit eine drehfeste Fixierung des Betätigungselements als Fixpunkt oder Widerlager für die Rasterung nutzbar.

Bei einer vorteilhaften Ausgestaltung kann vorgesehen sein, dass ein, beispielsweise das bereits erwähnte, Rastprofil und wenigstens ein, beispielsweise der bereits erwähnte wenigstens eine, Rastvorsprung radial zusammenwirken. Eine radiale Wirkung hat den Vorteil, dass sich die auftretenden Kräfte durch weitere, ebenfalls radial wirkenden Rastvorsprünge kompensieren lassen. Eine radiale Wirkung der Rasterung hat den weiteren Vorteil, dass eine Entkopplung von einer axialen Betätigung des Betätigungselements erreichbar ist.

Bei einer vorteilhaften Ausgestaltung kann vorgesehen sein, dass wenigstens ein, beispielsweise der bereits erwähnte wenigstens eine, Rastvorsprung an einem Federelement angeordnet ist. Somit ist ein Nachgeben des Rastvorsprungs im Zusammenspiel mit einem, beispielsweise dem bereits erwähnten, Rastprofil einfach gestaltbar. Elastische Deformationen eines Materials, an dem der wenigstens eine Rastvorsprung ausgebildet ist, sind auf einen eng begrenzten Raum beschränkbar.

Hierbei kann vorgesehen sein, dass der Federelement zweiseitig befestigt ist. Dies ermöglich eine definierte Führung des Federlements und/oder verringert eine Gefahr von Materialbrüchen oder sonstigen Materialermüdungen.

Es kann hierbei auch vorgesehen sein, dass wenigstens ein Befestigungspunkt des Federelements von dem Rastvorsprung in Umfangsrichtung beabstandet ist. Somit ist eine neutrale Faser des Federelements in Umfangsrichtung ausrichtbar.

Alternativ oder zusätzlich kann hierbei auch vorgesehen sein, dass wenigstens ein Befestigungspunkt des Federelements von dem Rastvorsprung axial beabstandet ist. Somit ist eine neutrale Faser des Federelements axial ausrichtbar.

Bei einer vorteilhaften Ausgestaltung kann vorgesehen sein, dass die Rasterung wenigstens oder genau zwei Rastvorsprünge hat. Somit ist eine gleichmäßige Beaufschlagung und/oder eine Kompensation von Kräften bei einer Betätigung der Rasterung erreichbar.

Besonders günstig ist eine Anordnung mit wenigstens oder genau drei Rastvorsprüngen. Somit ist eine definierte Führung der Rasterung erreichbar.

Hierbei kann vorgesehen sein, dass die Rastvorsprünge in Umfangsrichtung gleichmäßig verteilt angeordnet sind. Durch diesen symmetrischen Aufbau kann eine Beanspruchung der Rasterung gleichmäßig verteilt werden.

Bei einer vorteilhaften Ausgestaltung kann vorgesehen sein, dass ein, beispielsweise das bereits erwähnte, Rastprofil zwischen zwei Rastausnehmungen jeweils eine gerundete Spitze aufweist. Somit ist ein ergonomisch angenehmes und/oder ein materialschonendes Betätigen der Rasterung erreichbar.

Bei einer vorteilhaften Ausgestaltung kann vorgesehen sein, dass an dem Verstellelement mindestens ein Führungsmittel für eine Linearführung ausgebildet ist. Somit ist eine Kopplung einer axialen Betätigungsbewegung des Betätigungselements mit einer Dreh-Betätigungsbewegung des Verstellelements bei Bedarf erreichbar, beispielsweise durch eine an dem Betätigungselement befestigte Kappe, die in die Linearführung zum drehfesten Ankoppeln des Verstellelements eingreift.

Hierbei kann vorgesehen sein, dass das Führungsmittel zumindest teilweise axial benachbart zu der Rasterung ausgebildet ist. Somit ist axialer Bauraum einsparbar.

Alternativ oder zusätzlich kann hierbei vorgesehen sein, dass das Führungsmittel axial zwischen der Rasterung und einem freien Ende des Verstellelements ausgebildet ist. Somit ist das Führungsmittel möglichst nahe zu einen Angriffsort für eine manuelle Betätigung ausbildbar.

Bei einer vorteilhaften Ausgestaltung kann vorgesehen sein, dass sich ein Wirkbereich des mindestens einen Führungsmittels mit einem Wirkbereich der Rasterung zumindest teilweise überlappt. Somit ist eine axialen Baulänge reduzierbar.

Bei einer vorteilhaften Ausgestaltung kann vorgesehen sein, dass eine Teilung der Rasterung mit einer durch das wenigstens eine Führungsmittel definierten Winkelteilung einen gemeinsamen Teiler aufweist. Somit ist erreichbar, dass die Führungsmittel dort platzierbar sind, wo passende Strukturen der Rasterung, insbesondere eines, beispielsweise des bereits erwähnten, Rastprofils ausgebildet sind. Dies kann helfen, eine einfache Entformbarkeit nach einem Spritzguss zu erreichen.

Die Führungsmittel sollten möglichst weit radial nach außen gesetzt sein, um ein möglichst großes Drehmoment übertragen zu können, weshalb die Führungsmittel nicht mit der Rasterung bei der Entformung im Werkzeug kollidieren dürfen. Durch die beschriebene Ausgestaltung kann dies einfach erreicht werden.

Bei einer vorteilhaften Ausgestaltung kann vorgesehen sein, dass eine, beispielsweise die bereits erwähnte, Schulter des Verstellelements die Rasterung radial überragt. Somit ist ein radialer Bauraum, der beispielsweise für eine axiale, drehbare Fixierung des Verstellelements benötigt wird, für die Anordnung der Rasterung nutzbar.

Bei einer vorteilhaften Ausgestaltung kann vorgesehen sein, dass ein Verstellanschlag für den Verstellweg ausgebildet ist. Somit ist ein Verstellweg begrenzbar.

Bevorzugt sind zwei Verstellanschläge ausgebildet. Somit ist der Verstellweg an seinen beiden Enden begrenzbar.

Hierbei kann vorgesehen sein, dass der Verstellanschlag außerhalb des von der Rasterung eingenommenen Axialbereichs ausgebildet ist. Somit ist eine räumliche Trennung der Funktionen der Rasterung und der Verstellwegsbegrenzung erreichbar.

Alternativ oder zusätzlich kann hierbei vorgesehen sein, dass der Verstellanschlag an dem Niederhalter ausgebildet ist.

Somit ist eine Beaufschlagung des wenigstens einen Verstellanschlags über den Niederhalter auf ein Gehäuse ableitbar.

Bei einer vorteilhaften Ausgestaltung kann vorgesehen sein, dass an dem Verstellelement ein Verstellgegenanschlag ausgebildet ist, welcher mit dem Verstellanschlag zusammenwirkt. Somit ist eine Drehbarkeit des Verstellelements begrenzbar.

Hierbei kann vorgesehen sein, dass der Verstellgegenanschlag eine, beispielsweise die bereits erwähnte, mit dem Halteteil zusammenwirkende Schulter aufweist. Dies ermöglicht eine kompakte Bauform, bei der die axiale Fixierung und die Begrenzung des Verstellwegs auf engem Raum realisierbar sind.

Bei einer vorteilhaften Ausgestaltung kann vorgesehen sein, dass das Betätigungselement auf eine Push-Push-Mechanik einwirkt. Somit ist eine einfache Form einer linearen Betätigung beschrieben, die wenigstens einen, vorzugsweise zwei oder mehr als zwei, stabile Schaltzustände für die Betätigung bereitstellen kann.

Hierbei kann vorgesehen sein, dass eine Offenstellung der Push-Push-Mechanik durch das Verstellelement veränderbar ist. Somit ist auf einfache Weise eine Regelung eines Durchflusses mit wenigen Betätigungsvorgängen erreichbar. Durch die Anordnung einer linearen (axialen) Betätigung und einer Drehbetätigung zur Einstellung der Offenstellung ist eine intuitiv erfassbare Bedienmöglichkeit geschaffen.

Die Erfindung wird nun anhand von Ausführungsbeispielen näher beschrieben, ist jedoch nicht auf die Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: ein erfindungsgemäßes Ventil in einer Seitenansicht,
- Fig. 2: eine dreidimensionale Detailansicht auf das proximale Ende des Ventils aus Fig. 1,
- Fig. 3: eine Frontalansicht auf das proximale Ende des Ventils aus Fig. 1,
- Fig. 4: das Betätigungselement des Ventils aus Fig. 1 in einer dreidimensionalen Schrägansicht,
- Fig. 5: das Betätigungselement aus Fig. 4 in einer Frontalansicht auf sein freies Ende,
- Fig. 6: das Verstellelement des Ventils aus Fig. 1 in einer dreidimensionalen Schrägansicht,
- Fig. 7: das Verstellelement aus Fig. 6 in einer Frontalansicht auf sein freies Ende,
- Fig. 8: den Niederhalter des Ventils aus Fig. 1 in einer dreidimensionalen Schrägansicht,
- Fig. 9: den Niederhalter aus Fig. 8 in einer Frontalansicht auf sein freies Ende,
- Fig. 10: den Niederhalter aus Fig. 8 in einem Axialschnitt,
- Fig. 11: den Niederhalter aus Fig. 8 in einem zweiten, gegenüber Fig. 10 um 90° gedrehten Axialschnitt,
- Fig. 12: ein zweites erfindungsgemäßes Ventil in einer dreidimensionalen, teilweise aufgeschnittenen Schrägansicht,
- Fig. 13: ein Detail aus Fig. 12,
- Fig. 14: ein drittes zweites erfindungsgemäßes Ventil in einem Axialschnitt,
- Fig. 15: das Ventil aus Fig. 14 in einer Schnittdarstellung entlang der Schnittlinie in Fig. 14,
- Fig. 16: eine dreidimensionale Axialschnittansicht auf das Verstellelement 7 aus Fig. 14 und
- Fig. 17: eine dreidimensionale Schrägansicht auf das Betätigungselement 5 aus Fig. 14.

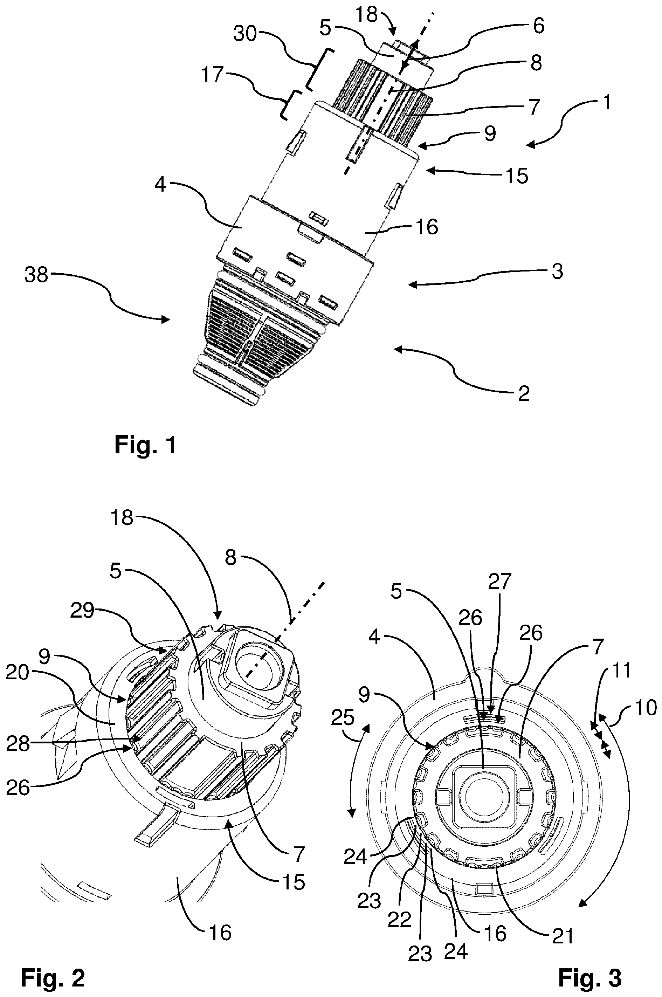

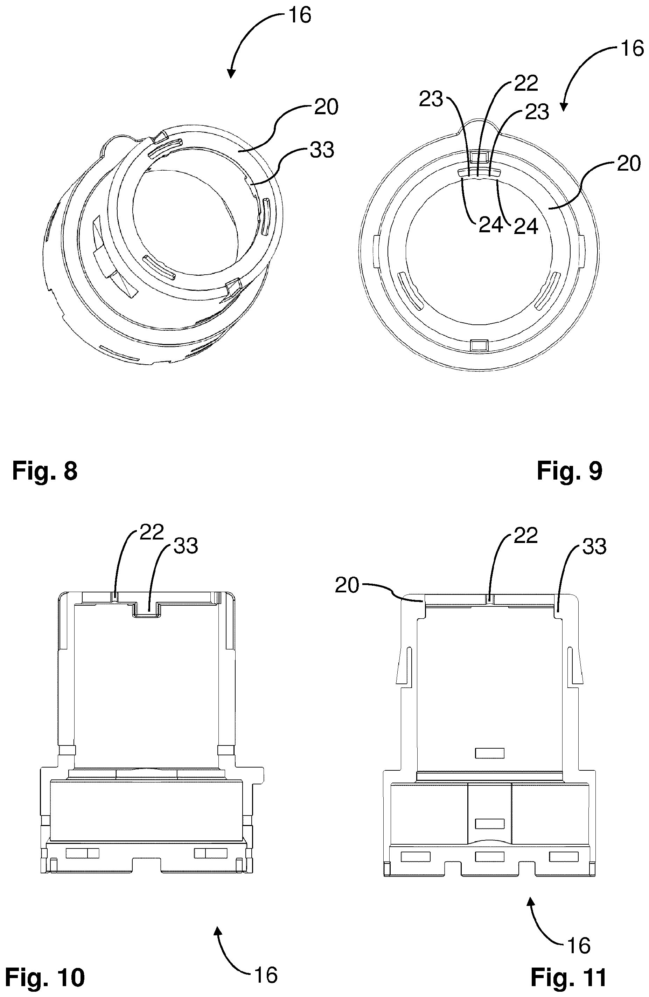

Die Figuren 1 bis 11 werden gemeinsam beschrieben.

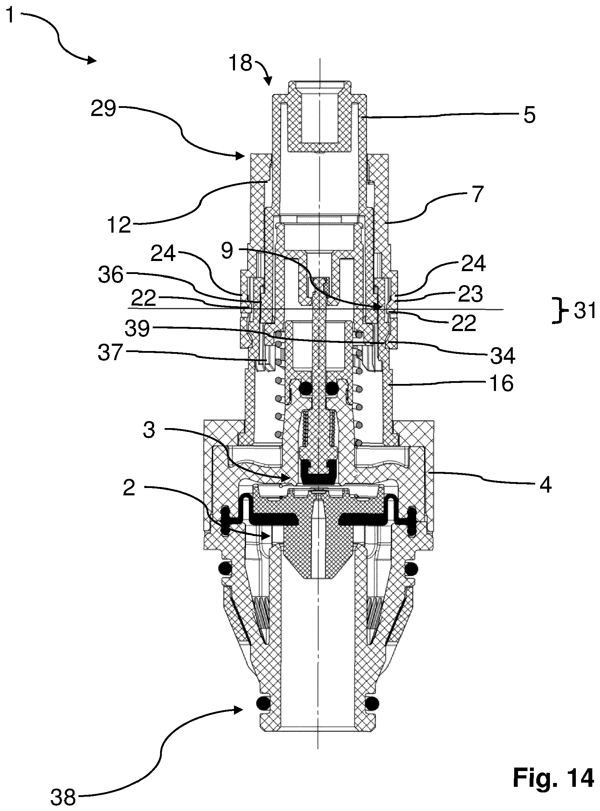

Ein im Ganzen mit 1 bezeichnetes Ventil hat ein Hauptventil 2, das in an sich bekannter Weise (vgl. auch Fig. 14) über ein Pilotventil 3 schaltbar ist. Hauptventil 2 und Pilotventil 3 sind in einem Gehäuse 4 angeordnet.

Das Ventil 1 wird mit seinem distalen Ende 38 in eine Aufnahme einer Armatur oder einer Ventilhalterung (beides nicht dargestellt) eingesetzt.

Zur manuellen Betätigung des Pilotventils 3 ist ein Betätigungselement 5 vorgesehen.

Das Betätigungselement 5 ist längs eines linearen, geradlinigen Betätigungswegs 6 manuell betätigbar. Hierdurch wird das Hauptventil 2 (über das Pilotventil 3) geschaltet.

Bei weiteren Ausführungsbeispielen wird das Hauptventil 2 direkt geschaltet.

Das Ventil 1 hat weiter ein Verstellelement 7, das um eine Drehachse 8 drehbar ist.

Das Verstellelement 7 dient zur Einstellung des Betätigungswegs 6, also zu einer Veränderung einer Länge des Betätigungswegs 6.

Das Betätigungselement 5 ist relativ zu dem Verstellelement 7 linear beweglich.

Das Ventil 1 weist weiter eine Rasterung 9 auf. Die Rasterung 9 wirkt mit dem Verstellelement 7 zusammen.

Ein verfügbarer Verstellweg 10 des Verstellelements 7 wird durch die Rasterung 9 in Einzelschritte 11 unterteilt.

Zwischen dem Verstellelement 7 und dem Betätigungselement 5 ist eine Steuerkurve 12 ausgebildet.

Die Steuerkurve 12 definiert einen veränderlichen Betätigungsanschlag 13 für das Betätigungselement 5. Hierzu wirkt die Steuerkurve 12 mit einem Betätigungsgegenanschlag 14 zusammen. Die Steuerkurve 12 hat somit eine in Drehrichtung des Verstellwegs 10 ansteigende oder abfallende Form.

Das Betätigungselement 5 ist gegenüber dem Gehäuse 3 drehfest, aber axial beweglich ausgebildet.

Das Verstellelement 7 ist gegenüber dem Gehäuse 3 drehbar angeordnet.

Somit kommt bei einer Drehung des Verstellelements 7 gegenüber dem Betätigungselement 5 immer eine andere Stelle der Steuerkurve 12 in Kontakt. Hieraus ergibt sich, dass eine obere Begrenzung des Betätigungswegs 6 veränderlich ist.

Der Betätigungsanschlag 13 definiert eine Offenstellung des Ventils 1.

Die Steuerkurve 12 und die Rasterung 9 sind räumlich, sowohl in radialer Richtung (in Bezug auf die Drehachse 8) als auch in axialer Richtung (längs der Drehachse 8), getrennt ausgebildet.

Die Steuerkurve 12 wirkt im Inneren des Verstellelements 7 zwischen dem Verstellelement 7 und dem Betätigungselement 5.

Die Rasterung 9 wirkt außerhalb des Verstellelements 7 zwischen dem Verstellelement 7 und einem Halteteil 15 eines Niederhalters 16.

Das Verstellelement 7 ist mit dem Halteteil 15 axial fixiert ist.

Die Rasterung 9 ist hierbei innerhalb Axialbereichs 17 angeordnet, der von dem Halteteil 15 eingenommenen ist.

Die Rasterung 9 ist radial zwischen der Steuerkurve 12 und dem Halteteil 15 ausgebildet.

Die Steuerkurve 12 ist hierbei an einem proximalen Ende 18 des Ventils 1 angeordnet. Das proximale Ende 18 ist der bestimmungsgemäße Ort für die manuelle Betätigung.

Das Verstellelement 7 hat eine Schulter 19, die von einem Kragen 20 des Halteteils 15 übergriffen wird, um das Verstellelement 7 axial fixiert und drehbar zu halten.

Die Rasterung 9 hat ein Rastprofil 21 an dem Verstellelement 7 und drei Rastvorsprünge 22, die an dem Halteteil 15 des Niederhalters 16 ausgebildet sind.

Die Rastvorsprünge 22 sind dabei beidseitig durch Federelemente 23 an Befestigungspunkten 24 an dem Niederhalter 16 befestigt. Die Rastvorsprünge 22 sind somit federnd gelagert.

Das Rastprofil 21 ist an dem Verstellelement 7 ausgebildet.

Das Rastprofil 21 und die Rastvorsprünge 22 wirken radial, d.h. die Rastvorsprünge 22 werden bei einer Drehbetätigung des Verstellelements 7 radial ausgelenkt. Eine neutrale Faser der Federelemente 23 ist jeweils in Umfangsrichtung 25 ausgerichtet.

Die Rastvorsprünge 22 sind in Umfangsrichtung 25 gleichmäßig beabstandet.

Das Rastprofil 21 ist durch eine Abfolge von Rastausnehmungen 26 gebildet. Zwischen je zwei Rastausnehmungen 26 ist eine gerundete Spitze 27 geformt, die den kontaktierenden Rastvorsprung 22 radial auslenkt.

An der Außenseite des Verstellelement 7 sind Führungsmittel 28 für eine Linearführung ausgebildet. Diese führen eine auf das proximale Ende 18 des Ventils aufgesetzte Kappe (nicht dargestellt) axial, um eine Betätigung es Betätigungselements 5 zu ermöglichen, und übertragen eine Drehbewegung der Kappe auf das Verstellelement7.

Die Führungsmittel 28 sind axial benachbart zu der Rasterung 9 und axial zwischen der Rasterung 9 und einem freien Ende 29 des Verstellelements 7 ausgebildet. Der Wirkbereich 30 der Führungsmittel 28 grenzt somit axial an den Wirkbereich 31 der Rasterung.

In Fig. 3 ist ersichtlich, dass jedem Führungsmittel 28 eine Rastausnehmung 26 eindeutig zugeordnet ist. Somit können das Führungsmittel 28 und die Rastausnehmungen 26 im Wesentlichen auf derselben radialen Höhe ausgebildet werden, ohne dass Hinterschnitte entstehen, die eine Entformung senkrecht zur Zeichenebene von Fig. 3 erschweren würden.

Die Teilung der Rasterung 9 ist kompatibel mit der durch das wenigstens eine Führungsmittel 28 definierten Winkelteilung, indem beide Teilungen einen gemeinsamen Teiler aufweisen.

Die Schulter 19 des Verstellelements 7 überragt die Rasterung 9 radial, so dass die Rastvorsprünge 22 als ein Teil des Halteteils 15 aufgefasst werden können.

Die Rasterung 9 ist beabstandet von dem Halteteil 15 angeordnet.

Die Steuerkurve 12 ist zwischen Halteteil 15 und Rasterung 9 angeordnet.

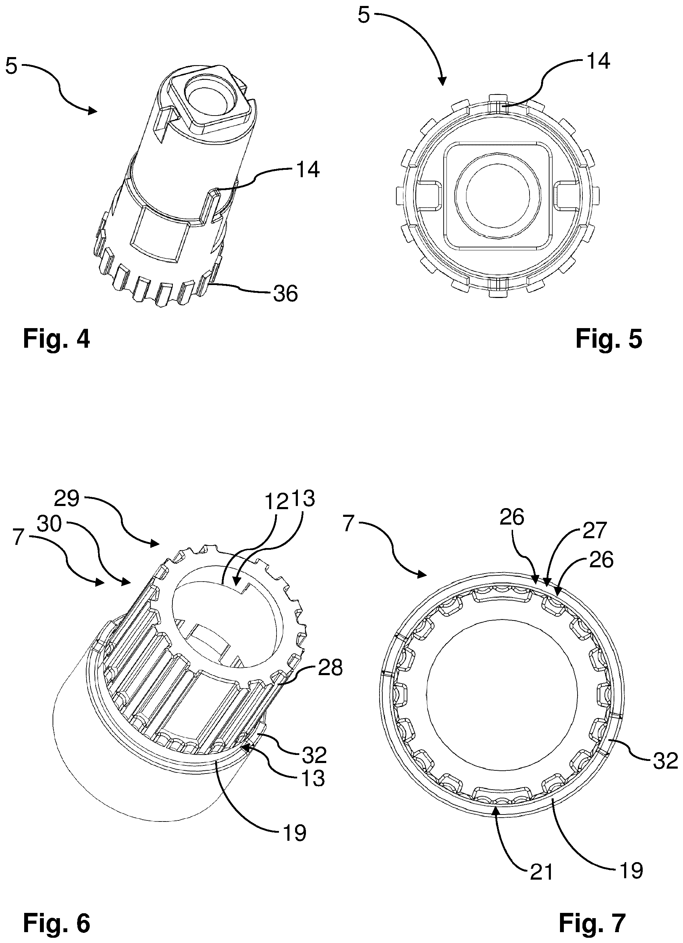

In Fig. 6 sind zwei Verstellanschläge 32 ausgebildet, die den Verstellweg 10 begrenzen.

Im Inneren des Halteteils 15 sind Verstellgegenanschläge 33 ausgebildet, die mit den Verstellanschlägen 32 zusammenwirken, um den Verstellweg 10 zu begrenzen.

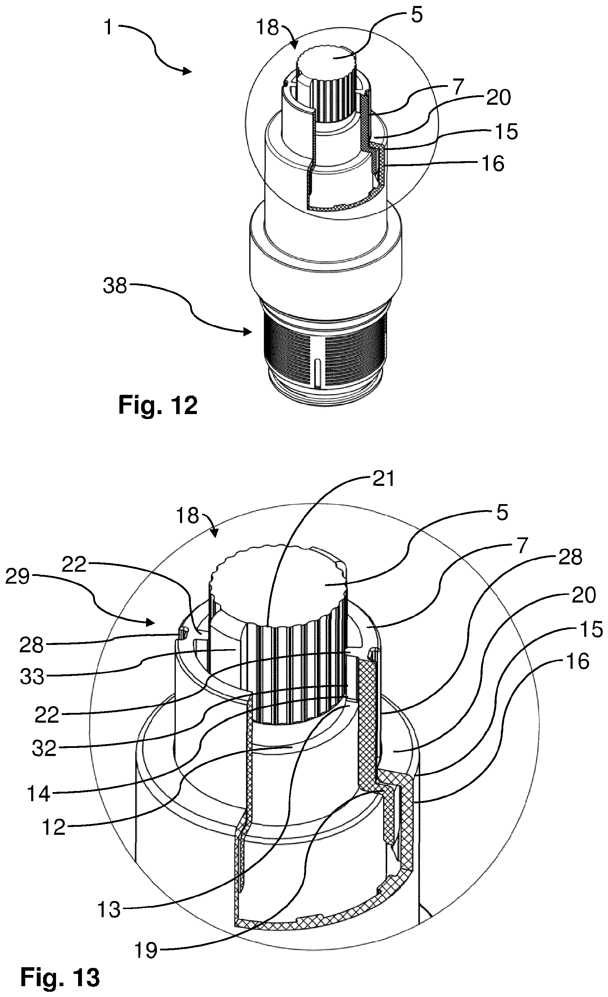

Fig. 12 und 13 zeigen ein weiteres erfindungsgemäßes Ausführungsbeispiel. Funktionell und/oder konstruktiv zu dem vorangehenden Ausführungsbeispiel gleichartige oder identische Bauteile und Funktionseinheiten sind mit denselben Bezugszeichen bezeichnet und nicht noch einmal gesondert beschrieben. Die Ausführungen zu den Figuren 1 bis 11 gelten daher zu den Figur 12 und 13 entsprechend.

Das Ausführungsbeispiel nach Fig. 12 und 13 unterscheidet sich von dem vorangehenden Ausführungsbeispiel gemäß Fig. 1 bis 11 schon dadurch, dass das Rastprofil 21 an dem Betätigungselement 5 ausgebildet ist.

Die Rastvorsprünge 22 sind dagegen an dem Verstellelement 7 ausgebildet.

Die zwei Rastvorsprünge 22 wirken gleichzeitig als Verstellgegenanschlag 33 für die feststehenden Verstellanschläge 32.

Bei dem Ausführungsbeispiel gemäß Fig. 12 und 13 überlappt sich der Wirkbereich 30 des mindestens einen Führungsmittels 28 und der Wirkbereich 31 der Rasterung 9 axial.

Die Rasterung 9 befindet sich axial zwischen der Steuerkurve 12 und einem proximalen Ende 18 des Ventils 1.

Die zwei Rastvorsprünge 22 sind an dem Verstellelement 7 angeformt.

Das Rastprofil 21 ist an dem Betätigungselement 9 ausgebildet.

Die Steuerkurve 12 stellt je nach Drehstellung des Verstellelements 7 einen anderen Abschnitt in einer anderen Axialposition als Betätigungsanschlag 13 bereit. Dieser Betätigungsanschlag 13 wirkt mit den als Betätigungsgegenanschlag 14 wirkenden Rastvorsprüngen 22 zusammen, um die obere Schaltposition des Betätigungselements 5 festzulegen.

Fig. 14 bis 17 zeigen ein weiteres erfindungsgemäßes Ausführungsbeispiel. Funktionell und/oder konstruktiv zu dem vorangehenden Ausführungsbeispiel gleichartige oder identische Bauteile und Funktionseinheiten sind mit denselben Bezugszeichen bezeichnet und nicht noch einmal gesondert beschrieben. Die Ausführungen zu den Figuren 1 bis 13 gelten daher zu den Figur 14 bis 17 entsprechend.

Bei diesem Ausführungsbeispiel ist die Rasterung 9 zwischen dem Verstellelement 7 und dem Niederhalter 16 ausgebildet. Eine Schnappnase 34 greift von außen in eine Nut 39 am Niederhalter 16 ein, um das Verstellelement 7 axial zu fixieren.

Die Steuerkurve 12 ist in der Nähe des proximalen Ende 18 des Ventils 1 an dem freien Ende 29 des Verstellelements 7 ausgebildet.

Im Inneren des Niederhalters 16 ist eine Push-Push-Mechanik 35 zu erkennen, die eine obere und eine untere Schaltposition definiert. Hierbei wirken in an sich bekannter Weise Führungsrippen 36 am Betätigungselement 5 mit Führungsnuten 37 am Niederhalter 16 zusammen.

Wenigstens ein Befestigungspunkt 24 des Federelements 23 ist von dem Rastvorsprung 22 axial beabstandet. Somit ist eine neutrale Faser des Federelements 23 axial ausgerichtet.

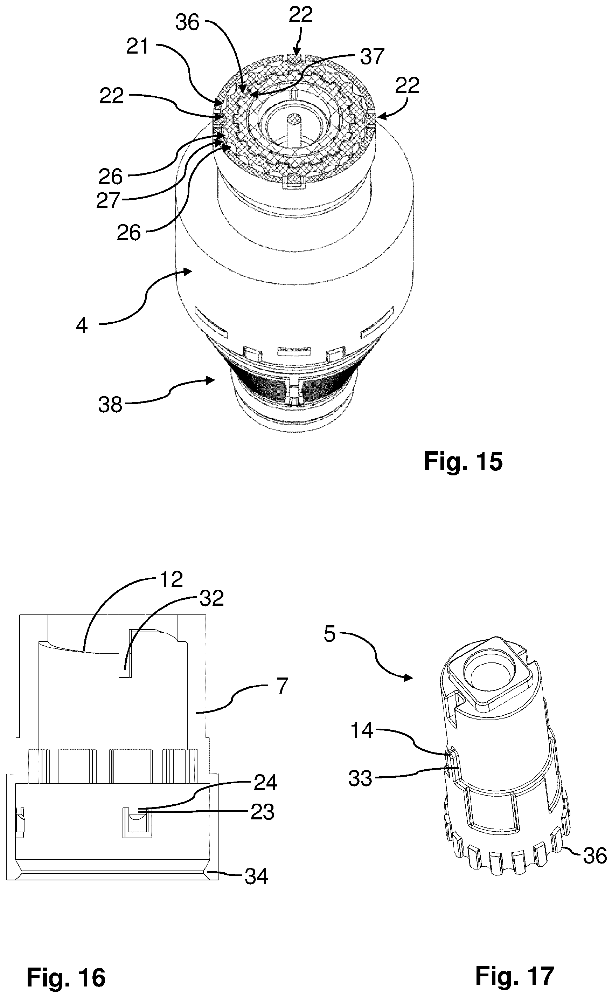

In Fig. 16 ist ersichtlich, dass an der Innenseite des Verstellelements 7 Verstellanschläge 32 ausgebildet sind, die mit Verstellgegenanschlägen 33, die am Betätigungselement 5 angeformt sind, zur Begrenzung des Verstellwegs 10 (vgl. Fig. 3) zusammenwirken.

In Fig. 16 ist außerdem ersichtlich, dass die Federelemente 23 eine axial ausgerichtete neutrale Faser haben und dass die Rastvorsprünge 22 jeweils einseitig an Befestigungspunkten 24 an dem Verstellelement 7 festgelegt sind. Die Befestigungspunkte 24 sind hierbei zum zugeordneten Rastvorsprung 22 axial beabstandet.

Erfindungsgemäß wird somit vorgeschlagen, bei einem Ventil 1 eine Rasterung 9 auszubilden, die eine Verstellweg einer Drehbewegung eines Verstellelements 7 unterteilt, wobei das Verstellelement 7 zur Veränderung eines Betätigungswegs 6 eines Betätigungselements 5 über eine Steuerkurve 12 eingerichtet ist und das Betätigungselement 5 zur manuellen, linearen Betätigung des Ventils 1 ausgebildet ist und wobei die Steuerkurve 12 und die Rasterung 9 voneinander getrennt ausgebildet sind.

### Bezugszeichenliste

- 1: Ventil
- 2: Hauptventil
- 3: Pilotventil
- 4: Gehäuse
- 5: Betätigungselement
- 6: Betätigungsweg
- 7: Verstellelement
- 8: Drehachse
- 9: Rasterung
- 10: Verstellweg
- 11: Einzelschritte
- 12: Steuerkurve
- 13: Betätigungsanschlag
- 14: Betätigungsgegenanschlag
- 15: Halteteil
- 16: Niederhalters
- 17: Axialbereich
- 18: proximales Ende des Ventils
- 19: Schulter
- 20: Kragen
- 21: Rastprofil
- 22: Rastvorsprung
- 23: Federelement
- 24: Befestigungspunkt des Federelements
- 25: Umfangsrichtung
- 26: Rastausnehmung
- 27: Spitze
- 28: Führungsmittel für eine Linearführung
- 29: freies Ende des Verstellelements
- 30: Wirkbereich des mindestens einen Führungsmittels
- 31: Wirkbereich der Rasterung
- 32: Verstellanschlag
- 33: Verstellgegenanschlag
- 34: Schnappnase
- 35: Push-Push-Mechanik
- 36: Führungsrippe
- 37: Führungsnut
- 38: distales Ende des Ventils
- 39: Nut

## Patentansprüche

1. Ventil (1), mit einem Betätigungselement (5), das entlang eines linearen Betätigungswegs (6) manuell betätigbar ist, um das Ventil (1) zu betätigen, und mit einem drehbaren Verstellelement (7), mit dem der Betätigungsweg (6) manuell einstellbar ist, wobei das Betätigungselement (5) relativ zu dem Verstellelement (7) linear beweglich ist, wobei das Verstellelement (7) mit einer Rasterung (9) zusammenwirkt, die einen verfügbaren Verstellweg (10) des Verstellelements (7) in Einzelschritte (11) unterteilt, wobei zwischen dem Verstellelement (7) und dem Betätigungselement (5) eine Steuerkurve (12) ausgebildet ist, welche einen Betätigungsanschlag (13) für das Betätigungselement (5), insbesondere in einer Offenstellung des Ventils (1), bildet, **dadurch gekennzeichnet, dass** die Steuerkurve (12) und die Rasterung (9) separat voneinander ausgebildet sind und dass die Rasterung (9) ein Rastprofil (21) und wenigstens einen vorzugsweise federnd gelagerten Rastvorsprung (22) hat.

2. Ventil (1) nach Anspruch 1, **dadurch gekennzeichnet, dass** das Verstellelement (7) mit einem Halteteil (15) eines Niederhalters (16) axial fixiert ist, insbesondere wobei die Rasterung (9) innerhalb eines von dem Halteteil (15) eingenommenen Axialbereichs (17) angeordnet ist.

3. Ventil (1) nach Anspruch 2, **dadurch gekennzeichnet, dass** die Rasterung (9) beabstandet von dem Halteteil (15), insbesondere zwischen der Steuerkurve (12) und dem Halteteil (15) oder insbesondere wobei die Steuerkurve (12) zwischen Halteteil (15) und Rasterung (9) angeordnet ist, angeordnet ist.

4. Ventil (1) nach einem der vorangehenden Ansprüche 2 oder 3, **dadurch gekennzeichnet, dass** das Halteteil (15) einen das Verstellelement (7) an einer Schulter (19) übergreifenden Kragen (20) aufweist.

5. Ventil (1) nach einem der vorangehenden Ansprüche,
**dadurch gekennzeichnet, dass** das oder ein Rastprofil (21) an dem Haltelement (15) oder an dem Verstellelement (7) oder an dem Betätigungselement (5) ausgebildet ist.

6. Ventil (1) nach einem der vorangehenden Ansprüche,
**dadurch gekennzeichnet, dass** der wenigstens eine oder wenigstens ein Rastvorsprung (22) an dem Halteteil (15) oder an dem Verstellelement (7) oder an dem Betätigungselement (5) ausgebildet ist.

7. Ventil (1) nach einem der vorangehenden Ansprüche,
**dadurch gekennzeichnet, dass** das oder ein Rastprofil (21) und der wenigstens eine oder wenigstens ein Rastvorsprung (22) radial zusammenwirken.

8. Ventil (1) nach einem der vorangehenden Ansprüche,
**dadurch gekennzeichnet, dass** der wenigstens eine oder wenigstens ein Rastvorsprung (22) an einem vorzugsweise zweiseitig befestigten Federelement (23) angeordnet ist, insbesondere wobei wenigstens ein Befestigungspunkt (24) des Federelements (23) von dem Rastvorsprung (22) in Umfangsrichtung (25) und/oder axial beabstandet ist.

9. Ventil (1) nach einem der vorangehenden Ansprüche,
**dadurch gekennzeichnet, dass** die Rasterung (9) wenigstens zwei, vorzugsweise wenigstens drei, Rastvorsprünge (22) hat, insbesondere wobei die Rastvorsprünge (22) in Umfangsrichtung (25) gleichmäßig verteilt angeordnet sind.

10. Ventil (1) nach einem der vorangehenden Ansprüche, **dadurch gekennzeichnet, dass** das oder ein Rastprofil (21) zwischen zwei Rastausnehmungen (26) jeweils eine vorzugsweise gerundete Spitze (27) aufweist.

11. Ventil (1) nach einem der vorangehenden Ansprüche, **dadurch gekennzeichnet, dass** an dem Verstellelement (7), insbesondere zumindest teilweise axial benachbart zu der Rasterung (9) und/oder axial zwischen der Rasterung (9) und einem freien Ende (29) des Verstellelements (7), mindestens ein Führungsmittel (28) für eine Linearführung ausgebildet ist.

12. Ventil (1) nach einem der vorangehenden Ansprüche, **dadurch gekennzeichnet, dass** sich ein Wirkbereich (30) des mindestens einen Führungsmittels (28) mit einem Wirkbereich (31) der Rasterung (9) zumindest teilweise überlappt und/oder dass eine Teilung der Rasterung (9) mit einer durch das wenigstens eine Führungsmittel (28) definierten Winkelteilung einen gemeinsamen Teiler aufweist.

13. Ventil (1) nach Anspruch 4, **dadurch gekennzeichnet, dass** die oder eine Schulter (19) des Verstellelements (7) die Rasterung (9) radial überragt.

14. Ventil (1) nach einem der vorangehenden Ansprüche, **dadurch gekennzeichnet, dass**, vorzugsweise außerhalb des von der Rasterung (9) eingenommenen Axialbereichs (17) und/oder an dem Niederhalter (16), ein Verstellanschlag (32) für den Verstellweg (10) ausgebildet ist.

15. Ventil (1) nach einem der vorangehenden Ansprüche, **dadurch gekennzeichnet, dass** an dem Verstellelement (7) ein Verstellgegenanschlag (33) ausgebildet ist, welcher mit dem Verstellanschlag (32) zusammenwirkt, insbesondere wobei der Verstellgegenanschlag (33) die oder eine mit dem Halteteil (15) zusammenwirkende Schulter (19) aufweist.

16. Ventil (1) nach einem der vorangehenden Ansprüche, **dadurch gekennzeichnet, dass** das Betätigungselement (5) auf eine Push-Push-Mechanik (35) einwirkt, insbesondere wobei eine Offenstellung der Push-Push-Mechanik (35) durch das Verstellelement (7) veränderbar ist.

## Claims

1. Valve (1), having an actuating element (5) that can be manually actuated along a linear actuating path (6) in order to actuate the valve (1), and having a rotatable adjusting element (7) by means of which the actuating path (6) can be manually adjusted, wherein the actuating element (5) is linearly movable relative to the adjusting element (7), wherein the adjusting element (7) cooperates with a detent mechanism (9) which divides an available adjusting path (10) of the adjusting element (7) into individual steps (11), wherein a control cam (12) is formed between the adjusting element (7) and the actuating element (5), which forms an actuating stop (13) for the actuating element (5), in particular in an open position of the valve (1), **characterized in that** the control cam (12) and the detent mechanism (9) are designed separately from one another and **in that** the detent mechanism (9) has a detent profile (21) and at least one detent projection (22) which is preferably spring-mounted.

2. Valve (1) according to claim 1, **characterized in that** the adjusting element (7) is axially fixed with a retaining part (15) of a hold-down device (16), in particular wherein the detent mechanism (9) is arranged within an axial region (17) occupied by the retaining part (15).

3. Valve (1) according to claim 2, **characterized in that** the detent mechanism (9) is spaced apart from the retaining part (15), in particular between the control cam (12) and the retaining part (15) or, in particular, wherein the control cam (12) is arranged between the retaining part (15) and the detent mechanism (9).

4. Valve (1) according to one of the preceding claims 2 or 3, **characterized in that** the retaining part (15) has a collar (20) which engages over the adjusting element (7) at a shoulder (19).

5. Valve (1) according to one of the preceding claims, **characterized in that** the or a detent profile (21) is formed on the retaining part (15) or on the adjusting element (7) or on the actuating element (5).

6. Valve (1) according to one of the preceding claims, **characterized in that** the at least one or at least one detent projection (22) is formed on the retaining part (15) or on the adjusting element (7) or on the actuating element (5).

7. Valve (1) according to one of the preceding claims, **characterized in that** the or a detent profile (21) and the at least one or at least one detent projection (22) cooperate radially.

8. Valve (1) according to one of the preceding claims, **characterized in that** the at least one or at least one detent projection (22) is arranged on a spring element (23) preferably fastened on two sides, in particular wherein at least one fastening point (24) of the spring element (23) is spaced apart from the detent projection (22) in the circumferential direction (25) and/or axially.

9. Valve (1) according to one of the preceding claims, **characterized in that** the detent mechanism (9) has at least two, preferably at least three, detent projections (22), in particular wherein the detent projections (22) are arranged evenly distributed in the circumferential direction (25).

10. Valve (1) according to one of the preceding claims, **characterized in that** the or a detent profile (21) between two detent recesses (26) has a preferably rounded tip (27).

11. Valve (1) according to one of the preceding claims, **characterized in that** at least one guide means (28) for linear guidance is formed on the adjusting element (7), in particular at least partially axially adjacent to the detent mechanism (9) and/or axially between the detent mechanism (9) and a free end (29) of the adjusting element (7).

12. Valve (1) according to one of the preceding claims, **characterized in that** an effective region (30) of the at least one guide means (28) overlaps at least partially with an effective region (31) of the detent mechanism (9) and/or **in that** a division of the detent mechanism (9) with an angular division defined by the at least one guide means (28) has a common divider.

13. Valve (1) according to claim 4, **characterized in that** the or a shoulder (19) of the adjusting element (7) protrudes radially beyond the detent mechanism (9).

14. Valve (1) according to one of the preceding claims, **characterized in that** an adjustment stop (32) for the adjusting path (10) is formed preferably outside the axial region (17) occupied by the detent mechanism (9) and/or on the hold-down device (16).

15. Valve (1) according to one of the preceding claims, **characterized in that** an adjustment counter-stop (33) is formed on the adjusting element (7), which cooperates with the adjustment stop (32), in particular wherein the adjustment counter-stop (33) has the or a shoulder (19) cooperating with the retaining part (15).

16. Valve (1) according to one of the preceding claims, **characterized in that** the actuating element (5) acts on a push-push mechanism (35), in particular wherein an open position of the push-push mechanism (35) can be changed by the adjusting element (7).

## Revendications

1. Soupape (1) munie d'un élément d'actionnement (5) qui peut être actionné manuellement le long d'une course d'actionnement (6) linéaire pour actionner la soupape (1) et d'un élément d'ajustement rotatif (7) avec lequel la course d'actionnement (6) est réglable manuellement, dans laquelle l'élément d'actionnement (5) est mobile de façon linéaire par rapport à l'élément d'ajustement (7), dans laquelle l'élément d'ajustement (7) coopère avec un enclenchement (9) qui divise une course d'ajustement disponible (10) de l'élément d'ajustement (7) en étapes séparées (11), dans laquelle est formée entre l'élément d'ajustement (7) et l'élément d'actionnement (5) une came de commande (12) qui forme une butée d'actionnement (13) pour l'élément d'actionnement (5), en particulier dans une position ouverte de la soupape (1), **caractérisée en ce que** la came de commande (12) et l'enclenchement (9) sont formés séparément l'une de l'autre et **en ce que** l'enclenchement (9) possède un profil d'enclenchement (21) et au moins une saillie d'enclenchement (22), supportée de préférence de façon élastique.

2. Soupape (1) selon la revendication 1, **caractérisée en ce que** l'élément d'ajustement (7) est fixé dans le sens axial par une partie de maintien (15) d'un élément presseur (16), l'enclenchement (9) étant en particulier disposé à l'intérieur d'une zone axiale (17) occupée par la partie de maintien (15).

3. Soupape (1) selon la revendication 2, **caractérisée en ce que** l'enclenchement (9) est disposé à distance de la partie de maintien (15), en particulier entre la came de commande (12) et la partie de maintien (15), la came de commande (12) étant en particulier disposée entre la partie de maintien (15) et l'enclenchement (9).

4. Soupape (1) selon l'une des revendications 2 ou 3, **caractérisée en ce que** la partie de maintien (15) présente un collet (20) qui entoure l'élément d'ajustement (7) sur un épaulement (19).

5. Soupape (1) selon l'une des revendications précédentes, **caractérisée en ce que** le ou un profil d'enclenchement (21) est formé sur l'élément de maintien (15) ou sur l'élément d'ajustement (7) ou sur l'élément d'actionnement (5).

6. Soupape (1) selon l'une des revendications précédentes, **caractérisée en ce que** l'au moins une ou au moins une saillie d'enclenchement (22) est formée sur la partie de maintien (15) ou sur l'élément d'ajustement (7) ou sur l'élément d'actionnement (5).

7. Soupape (1) selon l'une des revendications précédentes, **caractérisée en ce que** le ou un profil d'enclenchement (21) et l'au moins une ou au moins une saillie d'enclenchement (22) coopèrent dans le sens radial.

8. Soupape (1) selon l'une des revendications précédentes, **caractérisée en ce que** l'au moins une ou au moins une saillie d'enclenchement (22) est disposée sur un élément de ressort (23) fixé de préférence de deux côtés, au moins un point de fixation (24) de l'élément de ressort (23) étant en particulier éloigné de la saillie d'enclenchement (22) dans le sens de la périphérie (25) et/ou dans le sens axial.

9. Soupape (1) selon l'une des revendications précédentes, **caractérisée en ce que** l'enclenchement (9) possède au moins deux, de préférence au moins trois saillies d'enclenchement (22), lesquelles saillies d'enclenchement (22) sont en particulier réparties régulièrement dans le sens de la périphérie (25).

10. Soupape (1) selon l'une des revendications précédentes, **caractérisée en ce que** le ou un profil d'enclenchement (21) présente entre deux réceptacles d'enclenchement (26) une pointe (27) de préférence arrondie.

11. Soupape (1) selon l'une des revendications précédentes, **caractérisée en ce qu'**au moins un moyen de guidage (28) pour un guide linéaire est formé sur l'élément d'ajustement (7), en particulier au moins en partie contigu dans le sens axial de l'enclenchement (9) et/ou disposé dans le sens axial entre l'enclenchement (9) et une extrémité libre (29) de l'élément d'ajustement (7).

12. Soupape (1) selon l'une des revendications précédentes, **caractérisée en ce qu'**une zone d'action (30) de l'au moins un moyen de guidage (28) chevauche au moins en partie une zone d'action (31) de l'enclenchement (9) et/ou **en ce qu'**une division de l'enclenchement (9) présente un diviseur commun avec une division angulaire définie par l'au moins un moyen de guidage (28).

13. Soupape (1) selon la revendication 4, **caractérisée en ce que** le ou un épaulement (19) de l'élément d'ajustement (7) dépasse de l'enclenchement (9) dans le sens radial.

14. Soupape (1) selon l'une des revendications précédentes, **caractérisée en ce qu'**une butée d'ajustement (32) est formée pour la course d'ajustement (10), de préférence en dehors de la zone axiale (17) occupée par l'enclenchement (9) et/ou sur l'élément presseur (16).

15. Soupape (1) selon l'une des revendications précédentes, **caractérisée en ce qu'**est formée sur l'élément d'ajustement (7) une contre-butée d'ajustement (33) qui coopère avec la butée d'ajustement (32), la contre-butée d'ajustement (33) présentant en particulier le ou un épaulement (19) coopérant avec la partie de maintien (15).

16. Soupape (1) selon l'une des revendications précédentes, **caractérisée en ce que** l'élément d'actionnement (5) agit sur un mécanisme *push-push* (35), une position d'ouverture du mécanisme *push-push* (35) pouvant en particulier être modifiée par l'élément d'ajustement (7).
